# FASCICULE DE BREVET EUROPEEN

(11) **EP 2 732 742 B1**
(45) Date de publication et mention de la délivrance du brevet: **16.09.2015**
(21) Numéro de dépôt: 13193304.6
(22) Date de dépôt: 18.11.2013
(51) Int. Cl.: A47J 31/60

(54) **Tête rotative de nettoyage d'un réceptacle**
Drehkopf zum Reinigen von einem Behälter
Rotating head for the cleaning of a receptacle

(30) Priorité: 16.11.2012 LU 92096
(43) Date de publication de la demande: 21.05.2014
(73) Titulaire: De Bastos Almeida, Artur, 9570 Wiltz (LU)
(72) Inventeur: De Bastos Almeida, Artur, 9570 Wiltz (LU)
(74) Mandataire: Lecomte & Partners

(56) Documents cités:
- EP-A1- 1 525 832
- EP-A2- 1 803 380
- WO-A1-2009/127983
- WO-A1-2012/107246
- FR-A1- 2 840 521

## Description

### Domaine technique

L'invention a trait à l'évacuation d'agglomérat présent dans la cavité d'un ustensile tel qu'un compartiment d'infusion d'une machine à préparer des boissons chaudes. L'invention a trait à un dispositif conçu pour évacuer cet agglomérat. De manière plus particulière, l'invention a trait à un dispositif permettant d'évacuer l'agglomérat d'infusion résultant de la préparation d'une boisson chaude, plus particulièrement permettant d'évacuer le café aggloméré dans un compartiment d'infusion d'une machine à café.

### Technique antérieure

Certains modes de préparation de boissons consistent à infuser de l'eau sur une substance qui forme un milieu perméable. Dans le cas de la préparation de café, de l'eau bouillante ou de la vapeur d'eau traverse une dose de café moulu pour en extraire les arômes. Après usage, la dose de café doit être évacuée du compartiment dans lequel il était confiné avant qu'un autre café ne puisse être préparé. Or, après le contact avec l'eau et/ou la pression, la dose de café s'agglomère et adhère aux surfaces du compartiment. Un effort et un soin particulier sont nécessaires pour vider et nettoyer le compartiment. La difficulté à évacuer la dose de café augmente dans les cas où il a été préalablement compacté avant infusion, car l'agglomérat formé montre une cohésion accrue.

La forme du compartiment ou du porte-filtre complique encore l'opération d'évacuation. Ce dernier peut former une cavité substantiellement cylindrique dont la profondeur réduit l'efficacité d'extraction du café. Le compartiment est souvent pourvu de plusieurs parties cylindriques de diamètres différents, qui définissent des parties à profondeurs différentes, et qui donnent lieu à des recoins difficiles à nettoyer.

L'art antérieur propose des solutions permettant d'extraire une dose de café comprimée après infusion.

Le document GB812833 présente un dispositif permettant de vider un compartiment d'infusion de machine à café après usage du café. Suite à la réalisation d'une dose de café, le compartiment d'infusion est conduit automatiquement sous une vis. Toujours de manière automatique, cette vis s'introduit dans le compartiment d'infusion et enlève dans un mouvement de rotation le café usagé. La vis est logée dans un caisson qui permet de stocker le café usagé après extraction.

Le dispositif permet d'extraire du café mais pas de l'évacuer définitivement. Le caisson doit en outre être vidé régulièrement pour éviter les bourrages et pour préserver la capacité de la vis à retenir du café extrait. Le caisson doit être vidé dès qu'un niveau de remplissage critique est atteint. Il n'est pas apparent comment un tel dispositif peut être utilisé avec des compartiments d'infusion ayant des formes variées.

Le document FR2225126 décrit un appareil servant à préparer une infusion. Cet appareil a la capacité de vider le compartiment d'infusion et de nettoyer une paroi perforée jouxtant le compartiment en question. Le compartiment est monté sur un bras articulé. Dans un mouvement de retournement, le compartiment est stoppé par une butée qui génère un choc de nature à décoller en bloc le marc de café. La paroi perforée est mobile en translation. Dans son mouvement de translation, elle vient se frotter contre une brosse transversale. Les poils de la brosse peuvent s'insérer dans les recoins de la paroi perforée pour en extraire le moindre grain de café. La brosse peut évacuer chaque reste de café moulu même lorsque la paroi est une grille. La cinématique de retournement du compartiment d'infusion permet avantageusement de le vider en une opération sans que du café ne puisse retomber dedans. Cette solution ne permet pas de nettoyer les parois intérieures du compartiment d'infusion, si bien que des traces de café moulu peuvent subsister. Par ailleurs, le café peut être particulièrement comprimé avant infusion, ce qui peut créer un bloc extrêmement compact et adhésif. Il devient par conséquent dur à évacuer. Les restes de café peuvent à la longue s'additionner obstruant progressivement le volume utile du compartiment d'infusion.

Le document de brevet WO 2009/127983 A1 divulgue un dispositif comprenant une tête de nettoyage compatible pour nettoyer des compartiments d'infusion à cavité simple-dose et double-dose. La tête comprend une palette dont le profil correspond essentiellement à celui d'une cavité simple-dose. La palette est toutefois pourvue de deux bras élastiques destinés à correspondre à une cavité double-dose.

Le document de brevet WO 2012/107246 A1 divulgue une machine à nettoyer un compartiment d'infusion d'une machine à café. La machine comprend une tête de nettoyage ayant une forme figée. La tête de nettoyage est formée de quatre palettes dont le profil supérieur forme un ressaut destiné à permettre de pénétrer adéquatement une cavité d'infusion. Lors de l'utilisation de la machine, le filtre est retourné sur la tête de nettoyage qui est mise en rotation par un moteur.

Le document de brevet EP 1 803 380 A2 divulgue également une machine à nettoyer un compartiment d'infusion d'une machine à café. Lors du nettoyage, le filtre est retourné sur la tête de nettoyage. La force d'appui selon l'axe qui porte la tête de nettoyage est transformée en un mouvement de rotation autour de cet axe. La tête de nettoyage a une forme spécifique adaptée au profil d'un compartiment d'infusion spécifique.

### Résumé de l'invention

L'invention a pour objectif de résoudre au moins un des problèmes mentionnés dans l'art antérieur. L'invention a pour objectif de proposer une solution simple, efficace et économique à l'évacuation d'un agglomérat formé dans la cavité d'un ustensile tel qu'un compartiment d'infusion d'une machine à préparer des boissons par infusion. Plus particulièrement, l'invention a pour objectif de proposer une solution écologique à l'évacuation de l'agglomérat en question, applicable à une pluralité de formes de compartiments d'infusion, notamment des compartiments à dose simple et des compartiments à dose double.

L'invention a pour objet une tête rotative de nettoyage d'un réceptacle tel qu'un compartiment d'infusion d'une machine à café. La tête de nettoyage définit un axe et comprend une face frontale de nettoyage. La face frontale est remarquable en ce qu'elle comprend une portion annulaire apte à se rétracter axialement contre des efforts élastiques lors de l'insertion de la tête dans une portion du réceptacle de diamètre inférieur à celui de la face frontale.

La face frontale peut de préférence être constituée de plusieurs branches qui s'étendent radialement dans un plan depuis l'axe. Le plan est perpendiculaire à l'axe.

De préférence, la portion annulaire peut être disposée à une distance axiale dudit axe.

La portion annulaire peut avantageusement comprendre au moins une brosse déplaçable, disposée à être déplacée de façon réversible dans la direction axiale sous l'effet d'une force exercée sur et vers la brosse.

La brosse déplaçable peut de manière préférée être montée sur un support à ressort. Le ressort du support prend appui sur une partie du châssis de la tête.

La brosse déplaçable peut de préférence être attachée au châssis par au moins deux bras. Les bras sont alors disposés à s'engager avec un bord du châssis de la tête, de façon à maintenir la brosse en position lorsqu'aucune force n'est exercée sur celle-ci.

La brosse peut avantageusement être orientée de façon essentiellement parallèle à l'axe.

La portion annulaire de la tête de nettoyage peut avantageusement comprendre au moins une brosse qui est disposée à maintenir sa position selon la direction axiale sous l'effet d'une force exercée sur et vers ladite brosse.

De façon avantageuse, l'au moins une ou les brosses déplaçables peuvent être disposées à une extrémité axiale de ladite face frontale.

L'invention a également comme objet un dispositif d'évacuation d'un agglomérat présent dans la cavité d'un ustensile tel qu'un compartiment d'infusion d'une machine à café. Le dispositif comprend un support et une tête de nettoyage rotative disposée à être mise en rotation autour de son axe lorsqu'un effort est exercé sur et vers ladite tête, notamment par application manuelle de la cavité de l'ustensile sur la tête. Le dispositif est remarquable en ce que la tête de nettoyage rotative est conforme à la tête de nettoyage selon la présente invention.

Le dispositif peut avantageusement comprendre des moyens de guidage hélicoïdaux qui permettent de générer ledit mouvement de rotation de la tête à partir d'un mouvement de translation de la tête.

Des moyens élastiques peuvent faire partie du dispositif afin de maintenir la tête à distance du support.

Alternativement le dispositif peut comprendre un moteur électrique configuré pour générer ledit mouvement de rotation de la tête, et des moyens de détection de l'effort appliqué aptes à actionner le moteur électrique.

En position de travail, il est préféré que l'axe de rotation de la tête soit généralement vertical, l'angle entre l'axe et la verticale étant préférentiellement inférieur à 20°, plus préférentiellement inférieur à 10°.

Le support du dispositif peut de manière préférée comprendre un réservoir ouvert avec la tête du dispositif disposée au-dessus de l'ouverture du réservoir de manière à ce que la majorité de l'agglomérat évacué par la rotation de la tête dans la cavité de l'ustensile tombe par gravité dans le réservoir.

De préférence, le réservoir peut comprendre une paroi latérale dont la section forme un contour généralement fermé et préférentiellement au moins essentiellement circulaire, le bord supérieur de ladite paroi formant l'ouverture et, préférentiellement, comprenant une découpe configurée pour permettre le passage d'une poignée de l'ustensile.

Le réservoir peut avantageusement comprendre un fond amovible destiné à permettre la vidange en matière de l'agglomérat du réservoir.

Le fond amovible du réservoir peut de préférence comprendre des moyens de guidage par rapport au réservoir selon une direction transversale à la direction verticale, préférentiellement selon une direction au moins généralement horizontale, de manière à être amovible à la manière d'un tiroir.

La paroi latérale du réservoir peut comprendre sa face extérieure et/ou sur sa moitié supérieure, des moyens de fixation aptes à permettre la fixation du dispositif à un plan de travail dans lequel le dispositif est encastré.

L'invention permet d'extraire de manière exhaustive un agglomérat tel qu'un agglomérat de café dans un porte-filtre, et de l'évacuer définitivement. La tête du dispositif est configurée pour oeuvrer lorsque l'ustensile est appliqué sur le dispositif. Le dispositif est de plus prévu configuré pour que l'ustensile soit présenté retourné, c'est-à-dire avec sa cavité orientée vers le bas, ce qui empêche tout retour de la matière formant l'agglomérat dans la cavité puisqu'il s'échappe gravitationnellement. La tête comprend des moyens de nettoyage qui permettent de chasser l'essentiel de l'agglomérat. L'intégralité de la surface intérieure de la cavité de l'ustensile est nettoyée. La provision d'une partie annulaire apte à se rétracter axialement contre des efforts élastiques permet à la tête de nettoyage de s'adapter à des cavités de profils variés. Notamment, selon sa configuration, la tête s'adapte à des profondeurs et/ou des diamètres de cavités différentes. Les brosses de la tête adaptative peuvent ainsi nettoyer différentes profondeurs de cavités par contact direct. Ainsi, le risque de pollution de la boisson par des restes précédents est écarté.

Le dispositif présente un réservoir qui permet de contenir le café après usage, et en même temps de former un carénage récoltant les projections vers le fond du réservoir. Cette particularité permet d'opérer l'évacuation de l'agglomérat de manière propre et rapide.

### Brève description des dessins

D'autres caractéristiques et avantages de la présente invention seront mieux compris à l'aide de la description donnée à titre d'exemple et en référence aux dessins parmi lesquels :
- la figure 1 représente un ustensile avec une cavité tel qu'un porte-filtre de machine à café, et un dispositif d'extraction selon un mode préféré de l'invention ;
- les figures 2a et 2b illustrent des coupes d'un dispositif selon un mode préféré de l'invention avec un porte-filtre de machine à café ;
- la figure 3 est une vue schématique d'un dispositif selon un mode préféré de l'invention.

### Description des modes de réalisation

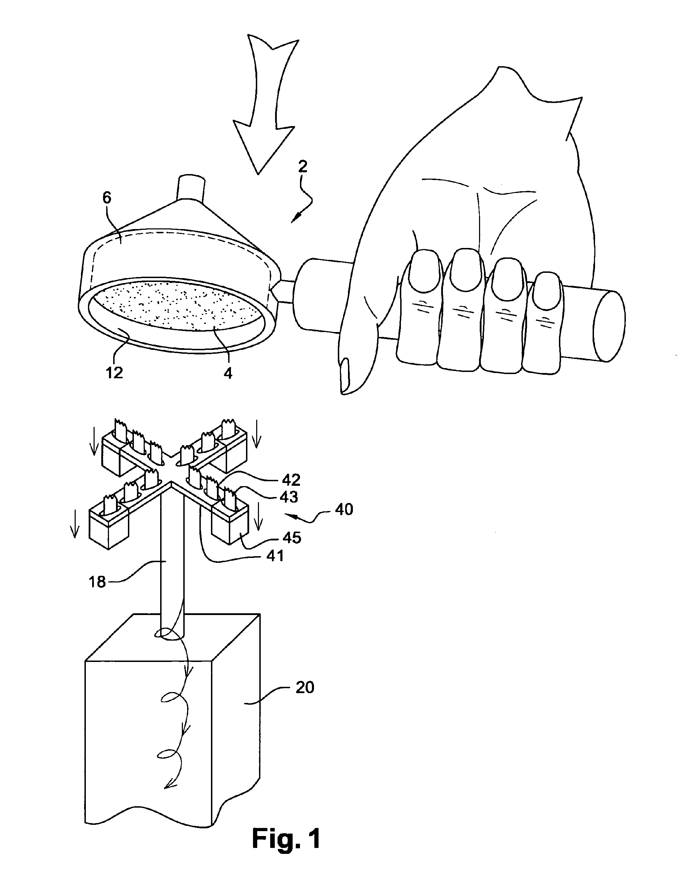

La figure 1 schématise un compartiment d'infusion 2 ayant servi à préparer un volume de boisson par infusion tel du café. Le compartiment d'infusion 2 est obstrué par un agglomérat 4 de café moulu faisant bloc. La figure 1 illustre le curetage du compartiment d'infusion 2 à l'aide de l'invention. Le compartiment d'infusion 2 peut également être utilisé pour toute boisson réalisée à partir d'une substance dont des principes sont extraits en contact d'un liquide ou de vapeur.

Le compartiment d'infusion 2 est une partie amovible d'une machine à café (non représentée). Il comprend une poignée et un porte-filtre 6 destiné à recevoir une dose de café moulu. La poignée facilite la manipulation du compartiment d'infusion car elle permet d'une seule main de le fixer sur la machine à café, et toujours avec cette même main, de la maintenir pendant que l'autre main le remplit d'une nouvelle dose de café. Couramment, la fixation du compartiment d'infusion 2 sur la machine à café s'effectue par l'intermédiaire d'un pas de vis dont l'engagement permet en parallèle de compacter le café moulu avec une force importante, ce qui influe sur les conditions d'extraction de l'agglomérat.

Le porte-filtre 6 forme une cavité renfermant une dose de café prédéfinie. La cavité est le lieu où s'effectue l'infusion au café en contact d'un liquide pour la préparation de la boisson. Le porte-filtre 6 a une forme généralement cylindrique ou conique. Dans son orientation d'infusion, orientation dans laquelle le compartiment d'infusion est fixé à la machine à café, le porte-filtre 6 présente une face supérieure ouverte et une face inférieure formant le filtre qui est généralement plane. Dans de nombreuses configurations, l'intérieur du porte-filtre 6 s'amincit successivement vers le bas, de sorte que la face supérieure ouverte est plus large que la face inférieure. L'amincissement est réalisé par paliers ou de manière continue.

Sur la figure 1, le compartiment d'infusion 2 est représenté retourné, ou à l'envers par rapport à son orientation d'infusion. La face supérieure ouverte est en bas. Ici, la cohésion de l'agglomérat 4 de café après utilisation ne permet de bien vider le porte-filtre 6 que lorsque sa face ouverte est vers le bas. Un dispositif selon l'invention est avantageux en ce qu'il propose une tête tournante 40 apte à s'insérer dans la cavité du porte-filtre 6, et qui comprend des moyens de nettoyage qui frottent ou raclent l'agglomérat 4 de café. La tête 40 tourne autour d'au moins un axe de rotation 18. La tête peut être reliée à un satellite lui-même en rotation par rapport au dispositif.

Sous l'action mécanique des moyens de nettoyage, l'agglomérat 4 de café se détache progressivement ou subitement du porte-filtre 6. Suite à ce détachement, le café tombe de manière gravitationnelle. A mesure que la tête 40 tourne et s'enfonce vers le fond du porte-filtre 6, l'essentiel de l'agglomérat 4 de café quitte de manière irréversible le porte-filtre 6. L'évacuation du café aggloméré fractionné s'effectue à sens unique, de manière définitive. Suivant la configuration de l'invention, l'intégralité de l'agglomérat 4 de café est chassée de manière irréversible du porte-filtre. Ainsi, le porte-filtre 6 devient propre et prêt pour un nouvel usage sans risque que du café frais ne soit en contact avec du café usagé.

On aura bien compris que l'invention permet de vider exhaustivement et durablement la cavité de l'ustensile ou compartiment d'infusion 2. En particulier, l'orientation retournée de l'ustensile évite que du café fractionné ne retombe dedans. L'invention est également efficace lorsque le café a été particulièrement compressé mécaniquement avant infusion.

L'agencement des moyens de nettoyage de la tête permet d'améliorer l'efficacité de l'invention. La tête de nettoyage comprend une face frontale de nettoyage. La face frontale comprend une portion annulaire apte à se rétracter axialement contre des efforts élastiques lors de l'insertion de la tête dans une portion du réceptacle de diamètre inférieur à celui de la face frontale. La face frontale est avantageusement formée par plusieurs branches 41. Suivant un mode de réalisation avantageux de l'invention, les moyens de nettoyage comprennent quatre branches 41. Les branches 41 s'étendent parallèlement à l'axe de rotation de la tête 40. Les branches 10 sont essentiellement similaires et implantées à la même hauteur.

Les branches forment en leur partie supérieure un plan perpendiculaire à la direction de rotation. Les parties supérieures s'étendent radialement et verticalement. Au moins une branche 41 et de préférence chaque branche 41 sert de support à au moins une brosse 42 qui est disposée de façon fixe. Alternativement, les brosses peuvent être amovibles, ce qui facilite leur nettoyage et/ou leur remplacement. Les brosses 42 sont alignées dans un plan perpendiculaire à la direction de rotation. En plus, chaque branche 41 sert de support à au moins une brosse 43 qui est disposée sur un support élastique tel qu'un support à ressort. Les brosses déplaçables 43 disposées sur chaque branche implémentent la partie annulaire rétractable de la tête de nettoyage. Une des brosses 43 est de préférence agencée à l'extrémité de la branche 41 et un élément de châssis 45 comprend le support à ressort correspondant. Le support à ressort maintient la brosse 43 dans le plan défini par les brosses 42 quand aucune contrainte n'est appliquée sur celle-ci. Sous l'action d'une force verticale dirigée vers le bas dans la position illustrée, le support à ressort permet à la brosse 43 de suivre un mouvement de translation vertical, parallèle à l'axe de rotation 18 vers le bas. Une fois que la contrainte verticale est levée, la brosse 43 reprend sa position initiale dans le plan défini par les brosses 42.

Alternativement, les parties supérieures des branches peuvent être fines de manière à pénétrer l'agglomérat 4 de café compacté. Lorsqu'elles s'enfoncent, les parties supérieures fractionnent l'agglomérat en blocs. Puis, en tournant, elles arrachent ces blocs et provoquent leur chute libre. Une combinaison de branches 41 à brosses 42, 43 et de branches fines non-illustrées est envisageable. Les branches peuvent exploiter la propriété de cohésion du café aggloméré. Décoller l'agglomérat par bloc permet de l'évacuer plus rapidement puisque la hauteur des blocs peut être supérieure à l'enfoncement des parties supérieures avant arrachement. De plus, décoller un bloc d'une surface intérieure 12 tend à laisser propre cette dernière puisque les grains restent collés au bloc et non à ladite surface.

Suivant la cohésion de l'agglomérat de café, l'action mécanique des moyens de nettoyage peut le réduire à l'état de poudre. Les branches 41 forment alors des moyens mécaniques qui étrillent l'agglomérat de café.

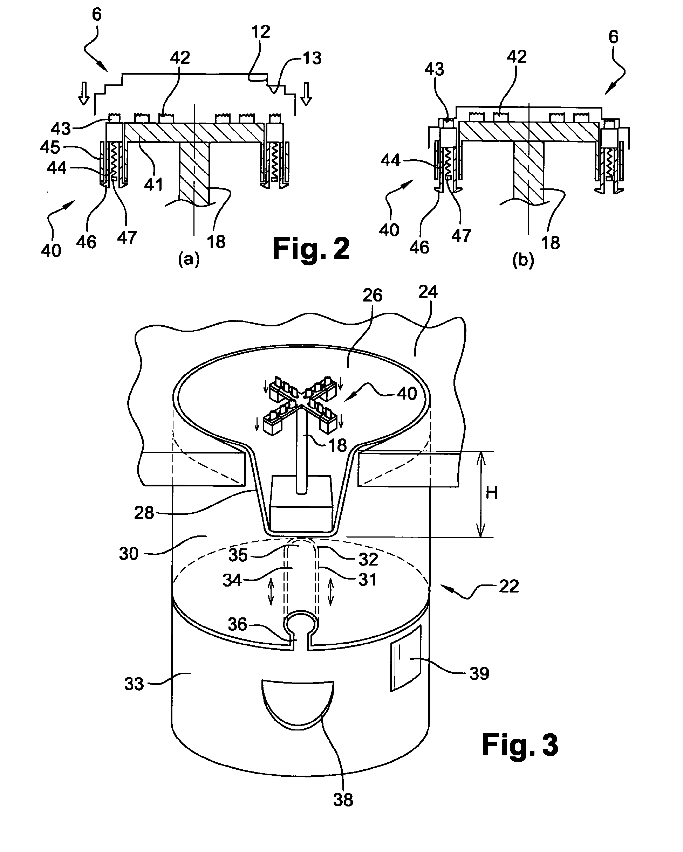

L'action de brosses 42 et en particulier des brosses 43 est illustrée par les dessins Fig 2a et Fig 2b. Une tête de nettoyage 40 conforme à la présente invention est montrée en coupe, ainsi qu'un porte-filtre 6. Le porte-filtre 6 illustré dans le dessin Fig 2a a la particularité de présenter un recoin ou une épaule annulaire 13, qui est particulièrement difficile à nettoyer à l'aide des dispositifs connus. Chaque brosse 43 est montée sur un support qui est apte à emmagasiner de l'énergie cinétique, tel qu'un ressort 44. D'autres réalisations menant au même effet seront à la portée de l'homme de l'art. Avantageusement, le ressort 44 est fixé d'une part à la face inférieure de la brosse 43 et prend d'autre part appui sur un élément 47 faisant partie du châssis 45. L'élément 47 est de préférence une barre transversale. Des moyens de retenue 46 selon l'axe 18 sont fixés à la brosse. Dans le mode avantageux illustré, les moyens de retenue sont formés par des bras qui s'étendent de la brosse jusqu'au fond du châssis 45. A leur extrémité, chaque bras 46 forme une patte qui s'engage avec un bord inférieur du châssis 45. Les pattes retiennent la brosse 43 à un niveau supérieur maximal quand aucune contrainte verticale vers le bas n'y est appliquée. Elles agissent contre la force du ressort 44 qui pousse la brosse 43 vers le haut.

Comme illustré par le dessin Fig 2b, quand la cavité du porte-filtre 6 est appuyée sur la tête de nettoyage 40, l'épaule 13 exerce une force verticale orientée vers le bas sur la brosse 43. Sous l'action de cette force, la brosse 43 est poussée vers le bas et le ressort 44 est comprimé. Ceci permet à la brosse 43 de venir en contact avec l'épaule annulaire 13, tandis que les brosses fixes 42 viennent en contact direct avec le fond du porte-filtre 6. Suivant la disposition des brosses montées sur un support à ressort, une tête de nettoyage conforme à la présente invention peut épouser une multitude de profils de porte-filtres 6 présentant des amincissements par paliers ou coniques vers leur face inférieure. Une fois que la cavité du porte-filtre 6 est enlevée, le ressort 44 pousse la brosse 43 vers le haut afin qu'elle reprenne sa position initiale.

Les poils et la structure des brosses 42, 43 sont configurés pour rentrer dans le porte-filtre 6. Les poils frottent l'agglomérat 4 de café, non illustré sur les dessins Fig 2a et Fig 2b. Leur raideur est configurée pour désagréger l'agglomérat de café. Les brosses permettent à un certain stade de nettoyage de frotter directement les surfaces intérieures 12 et épaules annulaires 13 de la cavité du porte-filtre 6 afin d'en chasser chaque grain de café. Après cette friction, chaque grain tombe du porte-filtre 6 qui devient alors particulièrement vierge de tout café usagé.

Le dispositif comprend des moyens de rotation qui permettent d'entrainer en rotation la tête 40. La tête est montée à l'extrémité supérieure d'un arbre 18 qui est relié au support 20 du dispositif à l'aide de roulements, de paliers ou de tout autre moyen équivalent. Les moyens de rotation comprennent des moyens d'actionnement qui permettent de commander la rotation de l'arbre 18 sur lequel est montée la tête 40.

Les moyens d'actionnement comprennent avantageusement une liaison hélicoïdale. La liaison hélicoïdale relie l'arbre 18 au support 20 du dispositif. Les liaisons hélicoïdales sont bien connues de l'homme du métier et ne seront pas développées plus avant. Le pas de la liaison hélicoïdale est supérieur à la moitié de l'envergure de la tête 40, l'envergure étant la largeur maximale que présente la tête. Préférentiellement, le pas de la liaison hélicoïdale est supérieur à l'envergure de la tête 40. Choisir un tel pas réduit les frictions dans la liaison hélicoïdale et facilite la conversion d'un effort exercé axialement sur l'arbre 18 en un mouvement de rotation de cet arbre 18. Le pas correspond à la distance sur laquelle l'arbre 18 se déplace en translation lorsqu'il effectue une rotation d'un tour sur lui-même.

Cependant, un pas trop grand réduit la rotation totale de la tête pour une translation donnée, et réduit son efficacité tant ses branches 41 balayeront moins intensivement la surface intérieure 12 du porte-filtre 6. A l'extrême, certaines portions de la surface intérieure 12 ne seront pas balayées. Pour cette raison, le pas est choisi en fonction de la course de translation de la liaison hélicoïdale et du nombre de branches 41. Cette rotation permise par la liaison hélicoïdale doit être supérieure à une fraction de tour, cette fraction étant l'inverse du nombre de branches 41. Ramené à la liaison hélicoïdale, le pas doit être inférieur à l'inverse du nombre de branches multiplié par la course permise par la liaison hélicoïdale. Le pas peut également être déterminé à partir du nombre de brosses en effectuant un raisonnement similaire.

Le dispositif comprend en outre des moyens de rappel permettant de ramener la tête 40 en position haute. Les moyens de rappel peuvent être un ressort. La raideur des moyens de rappel permettent en outre d'exercer un effort résistant à la descente du porte-filtre 2. L'effort résistant permet également d'augmenter la pénétration des moyens de nettoyage dans l'agglomérat 4 de café. Grâce aux moyens de rappel, le dispositif devient également actif lorsque la tête 40 remonte, ce qui améliore son efficience.

Cette solution est avantageuse car elle permet de fonctionner automatiquement en exploitant les sources d'énergie disponibles, à savoir la force de l'utilisateur. D'une seule main, l'utilisateur peut actionner le dispositif par l'intermédiaire du compartiment d'infusion 2. En effectuant un mouvement de va-et-vient vertical, il fait tourner la tête 40 du dispositif et évacue l'agglomérat 4 de café. Cette opération s'effectue rapidement et procure une efficacité adéquate au domaine de la préparation de boissons. Suivant les configurations des moyens de nettoyage, l'utilisateur peut se dispenser d'une étape de contrôle du résultat.

Suivant un mode alternatif de réalisation de l'invention, les moyens de rotation peuvent comprendre un moteur. Les moyens de commande peuvent comprendre une pédale. Suivant cette alternative de réalisation de l'invention, les moyens de commande peuvent comprendre un capteur d'effort couplé à la tête 40 qui détecte les efforts appliqués sur la tête 40. Si un utilisateur appuie à l'aide du porte-filtre 2 sur la tête 40, cette dernière tournera et ses moyens de nettoyage évacueront l'agglomérat 4 de café grâce à ses cloisons.

Le dispositif de nettoyage est par exemple destiné à être utilisé dans un débit de boisson. La propreté de ce lieu doit être préservée indépendamment des boissons qui y sont préparées. Pour cette raison, le dispositif est doté d'un réservoir 22 tel qu'illustré par le dessin Fig 3. Le réservoir permet de recueillir l'agglomérat dans sa chute. Suivant la vitesse de rotation de la tête 40 le café est projeté et risque d'atteindre l'environnement du dispositif. Le réservoir 22 permet d'intercepter les projections de café.

Le réservoir 22 est destiné à être inséré dans une découpe réalisée dans un plan de travail 24, à côté d'une machine à café. Le réservoir 22 fait également office de carénage qui enveloppe les parties mobiles du dispositif. Il encercle la tête 8 tout le long de sa course. Le réservoir 22 a une forme qui s'étend selon la direction de translation de la liaison hélicoïdale. Le réservoir 22 a une forme générale de profilé cylindrique orienté verticalement. Sa face inférieure est fermée par une cloison inférieure de manière à clore un volume de stockage en combinaison avec la paroi du cylindre.

Le réservoir 22 présente une ouverture 26. L'ouverture 26 est ménagée sur sa moitié supérieure. L'ouverture 26 donne accès à la tête 8 par le dessus, et permet en particulier de la recouvrir avec le porte-filtre 6. Le niveau moyen de l'ouverture 26 est réalisé à une hauteur qui est essentiellement au niveau du sommet de la tête 8, le niveau moyen de l'ouverture 26 correspond à l'altitude du centre de gravité d'une surface délimitée par le contour de l'ouverture 26. Préférentiellement, le niveau moyen de l'ouverture 26 est au-dessus du sommet de la tête 8 pour réduire le risque que des projections de café ne s'échappent du réservoir 22.

L'ouverture 26 comprend une fenêtre ou découpe 28 qui s'étend depuis le niveau de la tête 8 lorsqu'elle est en position haute, vers la position basse de la tête 8 sur une hauteur H supérieure ou égale à la course de la liaison hélicoïdale. Cette fenêtre 28 permet en outre l'insertion du manche du porte-filtre 2 et éventuellement d'une main qui le tient. La largeur de la fenêtre 28 est réduite afin de limiter le risque que des projections de café ne salissent l'entourage du dispositif.

Le réservoir cylindrique 22 comprend une partie fixe 30 à laquelle sont reliés le support 20 (figure 1) et la tête 40, et une partie amovible 33 qui permet de vider le réservoir 22.

Suivant un mode préféré de l'invention, la partie amovible 32 est une partie inférieure du réservoir qui délimite également un volume de stockage. Lorsque cette partie inférieure amovible 32 est détachée du reste du réservoir 22, elle permet d'emmener l'amas de café usagé. Préférentiellement, la partie inférieure amovible 32 renferme au moins la moitié du volume de stockage du réservoir 22.

La partie amovible 33 est disposée de la façon d'un tiroir. La liaison entre la partie amovible et la partie fixe 30 du réservoir 22 est assurée par des moyens de guidage. Les moyens de guidage comprennent au moins un élément rail 34 qui est arrangé suivant un diamètre du cylindre 33. Le rail fait saillie par rapport au bord supérieur du cylindre 33. Le rail présente une section circulaire ou polygonale et comprend une région amincie en contre-dépouille 36 à proximité du bord supérieur de la partie 33. Un tube 31 de section homologue au profil du rail est disposé de façon fixe dans la partie inférieure de la partie fixe 30 du réservoir 20. Le tube comprend une fente longitudinale disposée à coopérer avec la région en contre-dépouille 36 du rail. Le tube 31 peut recevoir le rail 34 par un mouvement transversal. La tenue par la région en contre-dépouille 36 assure que le rail 34 ne peut ressortir du tube 31 par une translation verticale. Seul un mouvement transversal peut faire rentrer et ressortir le rail 34 du tube 31.

La liaison proposée entre la partie fixe 30 et la partie amovible 33 présente en outre l'avantage que des déchets évacués par la tête de nettoyage 40 peuvent tomber librement jusqu'au fond du récipient 22. Le tube 31 ne présente pas un encombrement à la chute libre des déchets.

De façon avantageuse, des moyens de fixation réversibles entre la partie fixe 30 et la partie amovible 33 du récipient 22 sont prévus. A cet effet la partie de surface intérieure 32 de la partie fixe 30, qui est contactée par le rail 34 lorsque la partie amovible 33 est installée, comprend avantageusement au moins un aimant. L'aimant sert à retenir le rail métallique, qui le contacte par son extrémité 35. La force de retenue de l'aimant peut être surmontée par un opérateur qui applique une force de traction d'une certaine intensité sur le rail. L'aimant peut alternativement être disposé à l'extrémité 35 du rail 34. D'autres moyens de fixations réversibles seront connus par l'homme de l'art.

La surface de la partie amovible 33 du récipient 22 comprend une ouverture 38. L'ouverture 38 est disposée dans l'axe du rail 34, de façon à faciliter l'ouverture du tiroir 33 en tirant sur l'ouverture. De préférence des moyens de protection, tel qu'un toit non-illustré, protègent l'ouverture 38 sur le côté intérieur du récipient. Cette mesure évite que des déchets en chute dans le récipient ne ressortent par l'ouverture 38. Le toit a de préférence une forme telle que des déchets reçus en chute glissent le long du toit pour continuer leur chute vers le fond du récipient 22. Alternativement, une poignée extérieure peut être agencée sur la surface extérieure de la partie amovible, afin de faciliter l'ouverture et la fermeture du tiroir 33.

Afin d'inspecter le contenu du récipient 22 et notamment le niveau de déchets recueillis par celui-ci, une fenêtre 39 en matière transparent est disposée dans la paroi de la partie amovible 33.

Le réservoir et l'arbre sont préférentiellement en acier inoxydable, notamment en raison des contraintes sanitaires.

## Revendications

1. Tête rotative de nettoyage (40) d'un réceptacle (6) tel qu'un compartiment d'infusion (2) d'une machine à café, la tête définissant un axe (18) et comprenant une face frontale de nettoyage, **caractérisée en ce que** ladite face frontale comprend une portion annulaire apte à se rétracter axialement contre des efforts élastiques lors de l'insertion de la tête dans une portion du réceptacle de diamètre inférieur à celui de la face frontale.

2. Tête rotative de nettoyage selon la revendication 1, **caractérisé en ce que** la face frontale est constituée de plusieurs branches (10) s'étendant radialement dans un plan depuis l'axe (18).

3. Tête rotative de nettoyage selon une des revendications 1 à 2, **caractérisé en ce que** la portion annulaire est disposée à une distance axiale dudit axe (18).

4. Tête rotative de nettoyage selon l'une des revendications 1 à 3, **caractérisé en ce que** la portion annulaire comprend au moins une brosse déplaçable (43), disposée à être déplacée de façon réversible dans la direction axiale sous l'effet d'une force exercée sur et vers ladite brosse (43).

5. Tête rotative de nettoyage selon la revendication 4, **caractérisé en ce que** la brosse déplaçable (43) est montée sur un support à ressort (44), dans lequel le ressort prend appui sur une partie (47) du châssis (45) de la tête (40).

6. Tête rotative de nettoyage selon la revendication 5, **caractérisé en ce que** la brosse (43) est attachée au châssis par au moins deux bras (46) qui sont disposés à s'engager avec un bord du châssis (45) de la tête (40) de façon à maintenir la brosse (43) en position lorsque aucune force n'est exercée sur celle-ci.

7. Tête rotative de nettoyage selon l'une des revendications 4 à 6, **caractérisé en ce que** la brosse (43) est orientée de façon essentiellement parallèle à l'axe (18).

8. Tête rotative de nettoyage selon l'une des revendications 4 à 7, **caractérisé en ce que** la portion annulaire comprend au moins une brosse (42) qui est disposée à maintenir sa position selon la direction axiale sous l'effet d'une force exercée sur et vers ladite brosse (42).

9. Dispositif d'évacuation d'un agglomérat (4) présent dans la cavité (6) d'un ustensile tel qu'un compartiment d'infusion (2) d'une machine à café, comprenant :
un support (22), une tête de nettoyage (40) disposée à être mise en rotation autour de son axe (18) lorsqu'un effort est exercé sur et vers ladite tête (40) notamment par application manuelle de la cavité (6) de l'ustensile (2) sur la tête, **caractérisé en ce que** la tête (40) est conforme à l'une des revendications 1 à 8.

10. Dispositif selon la revendication 9, **caractérisé en ce que** le dispositif comprend des moyens de guidage hélicoïdaux qui permettent de générer ledit mouvement de rotation de la tête à partir d'un mouvement de translation de la tête (40) et/ou. un moteur électrique configuré pour générer ledit mouvement de rotation de la tête, ainsi que des moyens de détection de l'effort appliqué aptes à actionner le moteur électrique.

11. Dispositif selon l'une des revendications 9 à 10, **caractérisé en ce que** le dispositif comprend des moyens élastiques tendant à maintenir la tête à distance du support.

12. Dispositif selon l'une des revendications 9 à 11, **caractérisé en ce qu'il** est configuré de manière à ce qu'en position de travail, l'axe de rotation de la tête (40) soit généralement vertical, l'angle entre l'axe et la verticale étant préférentiellement inférieur à 20°, plus préférentiellement inférieur à 10°.

13. Dispositif selon l'une des revendications 9 à 12, **caractérisé en ce que** le support comprend un réservoir ouvert (22) avec la tête (40) du dispositif disposée au-dessus de l'ouverture (26) du réservoir de manière à ce que la majorité de l'agglomérat (4) évacué par la rotation de la tête dans la cavité de l'ustensile tombe par gravité dans le réservoir (22).

14. Dispositif selon la revendication 13, **caractérisé en ce que** le réservoir (22) comprend une paroi latérale (30) dont la section forme un contour généralement fermé et préférentiellement au moins essentiellement circulaire, le bord supérieur de ladite paroi formant l'ouverture (26) et, préférentiellement, comprenant une découpe (28) configurée pour permettre le passage d'une poignée de l'ustensile (2).

15. Dispositif selon l'une des revendications 13 à 14, **caractérisé en ce que** le réservoir (22) comprend un fond amovible (32) destiné à permettre la vidange en matière de l'agglomérat du réservoir et **en ce que** le fond comprend des moyens de guidage par rapport au réservoir selon une direction transversale à la direction verticale, préférentiellement selon une direction au moins généralement horizontale, de manière à être amovible à la manière d'un tiroir.

## Patentansprüche

1. Rotierender Kopf (40) für die Reinigung eines Behälters (6), wie z.B. eines Siebträgers (2) einer Kaffeemaschine, wobei der Kopf eine Achse (18) definiert und eine frontale Reinigungsseite besitzt, **dadurch gekennzeichnet, dass** die genannte Frontseite einen ringförmigen Abschnitt beinhaltet, der in der Lage ist sich beim Einführen des Kopfes in einen Bereich des Behälters, dessen Durchmesser kleiner ist, als der Durchmesser der Frontseite, gegen elastische Kräfte axial zurückzuziehen.

2. Rotierender Reinigungskopf nach Anspruch 1, **dadurch gekennzeichnet, dass** die Frontseite aus mehrere Abschnitten (10) besteht, die sich ausgehend von der Achse (18) radial in einer Ebene erstrecken.

3. Rotierender Reinigungskopf nach einem der Ansprüche 1 bis 2, **dadurch gekennzeichnet, dass** der ringförmige Abschnitt in einem axialen Abstand von der genannten Achse (18) angeordnet ist.

4. Rotierender Reinigungskopf nach einem der Ansprüche 1 bis 3, **dadurch gekennzeichnet, dass** der ringförmige Teil mindestens eine bewegliche Bürste (45) beinhaltet, die in der Lage ist, sich unter dem Einfluss einer Kraft, die auf und gegen die genannte Bürste (43) ausgeübt wird, reversibel in axialer Richtung zu bewegen.

5. Rotierender Reinigungskopf nach Anspruch 4, **dadurch gekennzeichnet, dass** die bewegliche Bürste (43) auf einem Träger mit Feder (44) angebracht ist, bei dem die Feder auf einem Teil (47) des Rahmens (45) des Kopfes (40) aufliegt.

6. Rotierender Reinigungskopf nach Anspruch 5, **dadurch gekennzeichnet, dass** die Bürste (43) mit mindestens zwei Armen (46) am Rahmen befestigt ist, die so angeordnet sind, dass sie mit einem Rand des Rahmens (45) des Kopfes (40) eingeführt werden, um die Bürste (43) in Position zu halten, wenn keinerlei Kraft auf diese ausgeübt wird.

7. Rotierender Reinigungskopf nach einem der Ansprüche 4 bis 6, **dadurch gekennzeichnet, dass** die Bürste (43) im Wesentlichen parallel zur Achse (18) ausgerichtet ist.

8. Rotierender Reinigungskopf nach einem der Ansprüche 4 bis 7, **dadurch gekennzeichnet, dass** der ringförmige Teil mindestens eine Bürste (42) beinhaltet, die so angeordnet ist, dass ihre Position unter dem Einfluss einer Kraft, die auf die genannte Bürste (42) ausgeübt wird, in axialer Richtung gehalten wird.

9. Vorrichtung für die Beseitigung eines Agglomerats (4) aus dem Hohlraum (6) eines Utensils, wie z.B. eines Siebträgers (2) einer Kaffeemaschine, mit:
einem Halter (22), einem Reinigungskopf (40), der so angeordnet ist, dass er in rotierende Bewegung um seine Achse (18) herum versetzt wird, wenn auf den genannten Kopf (40) eine Kraft ausgeübt wird, insbesondere wenn der Hohlraum (6) des Utensils (2) manuell auf den Kopf gedrückt wird, **dadurch gekennzeichnet, dass** der Kopf (40) einem der Ansprüche 1 bis 8 entspricht.

10. Vorrichtung nach Anspruch 9, **dadurch gekennzeichnet, dass** die Vorrichtung schraubenförmige Führungsmittel beinhaltet, die die Erzeugung der genannten Rotationsbewegung des Kopfes anhand einer Translationsbewegung des Kopfes (40) ermöglichen, und/oder einen Elektromotor, der konfiguriert ist, um die genannte Rotationsbewegung des Kopfes zu erzeugen sowie Mitteln für die Feststellung der ausgeübten Kraft, die in der Lage sind, den Elektromotor zu betätigen.

11. Vorrichtung nach einem der Ansprüche 9 bis 10, **dadurch gekennzeichnet, dass** die Vorrichtung elastische Mittel beinhaltet, die den Kopf auf Abstand vom Halter halten.

12. Vorrichtung nach einem der Ansprüche 9 bis 11, **dadurch gekennzeichnet, dass** sie so konfiguriert ist, dass die Rotationsachse des Kopfes (40) in Arbeitsposition im Allgemeinen senkrecht verläuft, wobei der Winkel zwischen der Achse und der Senkrechten vorzugsweise weniger als 20° und noch bevorzugter weniger als 10° beträgt.

13. Vorrichtung nach einem der Ansprüche 9 bis 12, **dadurch gekennzeichnet, dass** der Träger einen offenen Behälter (22) beinhaltet, wobei der Kopf (40) der Vorrichtung über der Öffnung (26) des Behälters angeordnet ist, damit der größte Teil des Agglomerats (4), das durch Rotation des Kopfes aus dem Hohlraum des Utensils entfernt worden ist, per Schwerkraft in den Behälter (22) fällt.

14. Vorrichtung nach Anspruch 13, **dadurch gekennzeichnet, dass** der Behälter (22) eine Seitenwand (30) besitzt, deren Querschnitt eine allgemein geschlossene und vorzugsweise mindestens im Wesentlichen runde Kontur bildet, wobei der obere Rand der genannten Seitenwand die Öffnung (26) bildet und einen Ausschnitt (28) aufweist, der so konfiguriert ist, dass er Platz für den Handgriff des Utensils (2) bietet.

15. Vorrichtung nach einem der Ansprüche 13 bis 14, **dadurch gekennzeichnet, dass** der Behälter (22) einen abnehmbaren Boden (32) besitzt, um das Ausleeren des Agglomerats aus dem Behälter zu ermöglichen, und der Boden Führungsmittel im Verhältnis zum Behälter in einer zur Senkrechten quer verlaufenden Richtung beinhaltet und vorzugsweise in einer Richtung, die im allgemeinen horizontal verläuft, so dass er in Form einer Schublade herausnehmbar ist.

## Claims

1. A rotary cleaning head (40) for a receptacle (6) such as an infusion compartment (2) of a coffee machine, the head defining an axis (18) and comprising a front cleaning face, **characterized in that** said front face comprises an annular portion which is capable of being retracted axially against elastic forces when inserting the head into a portion of the receptacle with a diameter that is smaller than that of the front face.

2. The rotary cleaning head as claimed in claim 1, **characterized in that** the front face is constituted by a plurality of branches (10) extending radially in a plane from the axis (18).

3. The rotary cleaning head as claimed in claim 1 or claim 2, **characterized in that** the annular portion is disposed at an axial distance from said axis (18).

4. The rotary cleaning head as claimed in one of claims 1 to 3, **characterized in that** the annular portion comprises at least one displaceable brush (43), disposed so as to be displaced in a reversible manner in the axial direction under the action of a force exerted on and towards said brush (43).

5. The rotary cleaning head as claimed in claim 4, **characterized in that** the displaceable brush (43) is mounted on a spring-loaded support (44), wherein the spring bears on a portion (47) of the frame (45) of the head (40).

6. The rotary cleaning head as claimed in claim 5, **characterized in that** the brush (43) is attached to the frame via at least two arms (46) which are disposed so as to engage with an edge of the frame (45) of the head (40) in a manner so as to maintain the brush (43) in position when no force is exerted thereon.

7. The rotary cleaning head as claimed in one of claims 4 to 6, **characterized in that** the brush (43) is orientated in a manner that is essentially parallel to the axis (18).

8. The rotary cleaning head as claimed in one of claims 4 to 7, **characterized in that** the annular portion comprises at least one brush (42) which is disposed in a manner so as to maintain its position in the axial direction under the action of a force exerted on and towards said brush (42).

9. A device for evacuating agglomerated material (4) present in the cavity (6) of a utensil such as an infusion compartment (2) of a coffee machine, comprising:
a support (22), a cleaning head (40) disposed so as to be rotated about its axis (18) when a force is exerted on and towards said head (40), in particular by manual application of the cavity (6) of the utensil (2) to the head, **characterized in that** the head (40) is as claimed in one of claims 1 to 8.

10. The device as claimed in claim 9, **characterized in that** the device comprises helical guide means which allow to generate said rotational movement of the head from a translational movement of the head (40), and/or an electric motor configured so as to generate said rotational movement of the head, as well as means for detecting the force applied which are suitable for actuating the electric motor.

11. The device as claimed in claim 9 or claim 10, **characterized in that** the device comprises elastic means which tend to maintain the head at a distance from the support.

12. The device as claimed in one of claims 9 to 11, **characterized in that** it is configured in a manner such that in the working position, the rotational axis of the head (40) is generally vertical, the angle between the axis and the vertical preferably being less than 20°, more preferably less than 10°.

13. The device as claimed in one of claims 9 to 12, **characterized in that** the support comprises an open reservoir (22) with the head (40) of the device disposed above the opening (26) of the reservoir in a manner such that the majority of the agglomerated material (4) evacuated by rotation of the head in the cavity of the utensil falls into the reservoir (22) under gravity.

14. The device as claimed in claim 13, **characterized in that** the reservoir (22) comprises a side wall (30) the section of which forms a generally closed contour that is preferably circular, the upper edge of said wall forming the opening (26), and preferably comprising a cutout (28) configured to allow the passage of a handle of the utensil (2).

15. The device as claimed in claim 13 or claim 14, **characterized in that** the reservoir (22) comprises a removable base (32) in order to allow agglomerated material to be emptied out from the reservoir and **in that** the base comprises means for guiding with respect to the reservoir in a direction transverse to the vertical direction, preferably in a direction that is at least generally horizontal, so that it is removable in the manner of a drawer.
